# EUROPÄISCHE PATENTSCHRIFT

(11) **EP 1 219 627 B1**
(45) Veröffentlichungstag und Bekanntmachung des Hinweises auf die Patenterteilung: **05.03.2008**
(21) Anmeldenummer: 01130047.2
(22) Anmeldetag: 18.12.2001
(51) Int. Cl.: C07F 9/38

(54) **Verfahren zur Herstellung von Ethylen-1,2-diphosphonsäuren**
Process for Preparing Ethane-1,2-diphosphonic acids
Procédé de préparation des acides éthylène-1,2-diphosphoniques

(30) Priorität: 23.12.2000 DE 10065053
(43) Veröffentlichungstag der Anmeldung: 03.07.2002
(73) Patentinhaber: Clariant Produkte (Deutschland) GmbH, 65929 Frankfurt am Main (DE)
(72) Erfinder: Sicken, Martin, Dr., 51149 Köln (DE); Schmitz, Hans-Peter, 50321 Brühl (DE)

(56) Entgegenhaltungen:
- US-A- 2 957 931
- US-A- 4 762 649

## Beschreibung

Die vorliegende Erfindung betrifft ein Verfahren zur Herstellung von Ethylendiphosphonsäuren der allgemeinen Formel I

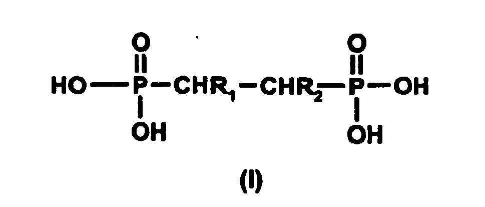

in der R₁ und R₂ gleich oder verschieden sein können und für Wasserstoff, für eine Carboxylgruppe, für ein Carbonsäurederivat, für eine - ggf. substituierte - Alkylgruppe mit 1 - 10C-Atomen, für Phenyl, Benzyl oder für alkylsubstituierte Aromaten stehen.

Phosphonsäuren sind von großer technischer Bedeutung und werden in großem Umfang selbst oder in Form ihrer Salze und Ester in verschiedensten Anwendungsgebieten eingesetzt. Beispiele für Anwendungen der Phosphonsäuren sind Wasserenthärtung, Erz-Flotation, Schwermetall-Komplexierung sowie deren Einsatz als Ausgangsprodukte für die Herstellung von Flammschutzmitteln, Pharmaka und Pestiziden.

In den vielfältigen Anwendungen, in denen Phosphonsäuren als Salz- oder Komplexbildner fungieren, sind vor allem Di- und Polyphosphonsäuren von Interesse. Ethylendiphosphonsäuren der allgemeinen Formel (I) 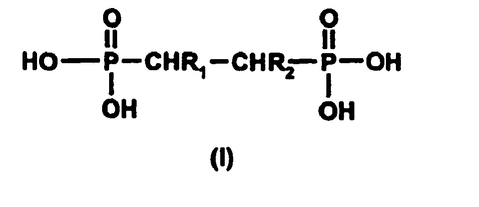 sind dabei von besonderer Wichtigkeit.

Die Herstellung von Ethylendiphosphonsäure (mit R₁, R₂ = Wasserstoff in Formel I) erfolgt im bekannten Stand der Technik durch aufwendige mehrstufige Synthesen.

So wird in [K. Moedritzer, R. R. Irani, J. Inorg. Nucl. Chem. 22 (1961) 297-304] beispielsweise ein Verfahren beschrieben, bei dem zunächst durch Umsetzung von ß-Chlorethyl-phosphonsäurediethylester mit Kaliumdiethylphosphit der Tetraethylester der Ethylendiphosphonsäure hergestellt wird, welcher dann durch Hydrolyse mit konzentrierter Salzsäure in die gewünschte Ethylendiphosphonsäure überführt wird.

In der DE 21 58 765 A1 wird ein Verfahren vorgeschlagen, bei dem zunächst Triphenylphosphit mit Tris(chlorethyl)phosphit unter Abspaltung von Dichlorethan zum Ethylendiphosphonsäuretetraphenylester umgesetzt wird, der dann sauer oder alkalisch unter Abspaltung von Phenol in die gewünschte Ethylendiphosphonsäure überführt wird.

Auch das in [S. M. Shner, L. P. Bocharova, I. K. Rubtsova, J. Gen. Chem. USSR 37 (1967 390-392] beschriebene Verfahren geht von Trischlorethylphosphit aus, welches mit Ethin (Acetylen) zum Ethylendiphosphonsäuretetrakis(chlorethyl)ester umgesetzt wird, der dann durch saure Hydrolyse in die gewünschte Ethylendiphosphonsäure überführt wird.

Die US-A 2,957,931 beschreibt ein Verfahren zum Herstellen von Ethylen-1,2-diphosphonsäureestem durch Umsetzung der entsprechenden Phosphorigsäureester mit Azetylen. Dieses bekannte Verfahren zum Erzeugen von Phosphor-Kohlenstoff-Bindungen geht somit von Ausgangsprodukten organischer Natur aus, die eine solche Bindung schon enthalten.

Allen vorangegangenen Verfahren sind die Nachteile gemeinsam, dass die Ausgangsverbindungen ihrerseits aufwendig und teuer hergestellt werden müssen, dass unzureichende Ausbeuten erhalten werden und dass in erheblichem Maße unerwünschte Nebenprodukte, wie Alkylhalogenide und Phenol entstehen. Dies hat zur Folge, dass die Verfahren unwirtschaftlich und umwelttechnisch unzureichend sind und die danach hergestellten Ethylendiphosphonsäuren praktisch nicht zugänglich sind und somit in vielen möglichen Anwendungen nicht eingesetzt werden können.

Es besteht daher ein Bedarf an einem Verfahren zur Herstellung von Ethylendiphosphonsäuren, welches auf einfache Art und Weise durchführbar ist und bei dem einheitliche Produkte in hoher Ausbeute erhalten werden. Auch sollte ein solches Verfahren den bisher bekannten ökonomisch und umwelttechnisch deutlich überlegen sein, indem leicht erhältliche oder leicht synthetisierbare, *möglichst anorganische* Ausgangsverbindungen eingesetzt werden und keine unerwünschten Nebenprodukte anfallen.

Der Erfindung liegt somit die Aufgabe zugrunde, ein Verfahren zur Herstellung von Ethylendiphosphonsäuren zur Verfügung zu stellen, das die vorgenannten Nachteile vermeidet und in einer Stufe, ausgehend von einfachen und leicht erhältlichen Edukten, zum gewünschten Produkt führt.

Diese Aufgabe wird gelöst durch ein Verfahren der eingangs genannten Art, dadurch gekennzeichnet, dass man Phosphorige Säure (H₃PO₃) direkt mit Alkinen ohne Lösungsmittel in der H₃PO₃-Schmelze in Gegenwart eines Radikalinitiators umsetzt.

Das erfindungsgemäße Verfahren weist eine hohe Selektivität auf und führt in sehr guten Ausbeuten zu den entsprechenden Ethylendiphosphonsäuren. Dies ist besonders überraschend, da die in [C. E. Griffin, H. J. Wells, J. Org. Chem. 24 (1959) 2049] beschriebenen Versuche zur Umsetzung von phosphoriger Säure mit Olefinen nur zu geringen Ausbeuten und erheblichen Nebenreaktionen führen.

Das erfindungsgemäße Verfahren weist gegenüber den bisher bekannten Verfahren erhebliche Vorteile auf, da es einstufig verläuft, auf den Einsatz komplizierter und halogenhaltiger Edukte verzichtet, kaum Nebenprodukte erzeugt und insgesamt ein äußerst wirtschaftliches Verfahren darstellt.

Bevorzugt werden als Radikalstarter Azoverbindungen eingesetzt.

Bevorzugt handelt es sich bei den Azoverbindungen um kationische und/oder nicht-kationische Azoverbindungen.

Bevorzugt werden als kationische Azoverbindungen 2,2'-Azobis(2-amidinopropan)-dihydrochlorid oder 2,2'-Azobis(N,N'-dimethylenisobutyramidin)dihydrochlorid eingesetzt.

Bevorzugt werden als nicht-kationische Azoverbindungen Azobis(isobutyronitril), 4,4'-Azobis(4-cyano-pentansäure), 2,2'-'Azobis(2-methylbutyronitril) eingesetzt.

Bevorzugt werden als Radikalstarter peroxidische anorganische und/oder peroxidische organische Radikalstarter eingesetzt.

Bevorzugt werden als peroxidische anorganische Radikalstarter Wasserstoffperoxid, Ammoniumperoxodisulfat und/oder Kaliumoperoxodisulfat eingesetzt.

Bevorzugt werden als peroxidische organische Radikalstarter Dibenzoylperoxid, Di-tert.-butylperoxid und/oder Peressigsäure eingesetzt.

Eine breite Auswahl geeigneter Radikalstarter findet sich beispielsweise in Houben-Weyl, Ergänzungsband 20, im Kapitel "Polymerisation durch radikalische Initiierung" auf den Seiten 15-74

Bevorzugt werden die Radikalstarter während der Reaktion kontinuierlich zudosiert

Die Ethylendiphosphonsäuren werden hergestellt, indem Phosphorige Säure in Gegenwart eines Radikalinitiators mit Alkinen der allgemeinen Formel (II),

R₁ - C ≡ C - R₂ (II)

in der R₁ und R₂ gleich oder verschieden sein können und für Wasserstott oder für eine Alkylgruppe mit 1-10 C-Atomen stehen, umgesetzt wird.

Als Alkine können sowohl das unsubstituierte Ethin (Acetylen) mit R₁, R₂ = H in Formel (II), einfach substituierte Derivate mit R₁ = H; R₂≠ H in Formel (II) oder aber auch zweifach substituierte Alkine mit R₁, R₂ ≠ H in Formel (II) eingesetzt werden. Beispiele hierfür sind die Alkine Ethin (Acetylen), Propin, 1-Butin, 2-Butin, 1-Pentin, 2-Pentin, 1-Hexin, 2-Hexin, 3-Hexin,

Besonders bevorzugt wird Ethin (Acetylen) eingesetzt.

Bevorzugt erfolgt die Umsetzung bei einer Temperatur von 70 bis 130°C.

Bevorzugt erfolgt die Umsetzung durch Einleiten von gasförmigem Ethin (Acetylen) unter Normaldruck.

Bevorzugt erfolgt die Umsetzung unter Druck.

Bevorzugt wird das Verfahren so geführt, dass nach einem Teilumsatz die ausfallende Ethylendiphosphonsäure abfiltriert wird und nach Aufstocken der verbrauchten Phosphorigen Säure weiter Ethin (Acetylen) addiert wird.

Der Gegenstand der vorliegenden Erfindung umfasst insbesondere auch ein Verfahren, bei dem man Phosphorige Säure mit Ethin (Acetylen) in Gegenwart eines kationischen oder nicht-kationischen Radikalstarters oder in Gegenwart eines peroxidischen Radikalstarters zur Ethylendiphosphonsäure umsetzt.

Der Gegenstand der vorliegenden Erfindung umfasst insbesondere auch ein Verfahren, bei dem man Phosphorige Säure mit Ethin (Acetylen) in Gegenwart eines kationischen oder nicht-kationischen Radikalstarters oder in Gegenwart eines peroxidischen Radikalstaters zur Ethylendiphosphonsäure umsetzt und diese kontinuierlich aus dem Reaktionsgemisch durch Umlauf-Filtration entfernt und ebenso kontinuierlich die verbrauchte Phosphorige Säure durch neue ersetzt.

Die gewünschten Ethylendiphosphonsäuren werden mit hoher Selektivität in hoher Reinheit erhalten.

Sowohl die Phosphorige Säure als auch die Alkine können jeweils im Überschuss eingesetzt werden, da die Reaktionspartner immer im Molverhältnis 2 zu 1 (Phosphorige Säure zu Alkin) reagieren.

Die Erfindung wird durch die nachstehenden Beispiele erläutert:

### Beispiel 1: Ethylendiphosphonsäure

In einem beheizbaren Glasrohrreaktor mit Begasungsfritte wurde über einen Zeitraum von 10 h bei einer Temperatur von ca. 100°C gasförmiges Ethin (Acetylen) in 164 g (2 Mol) geschmolzene Phosphorige Säure eingeleitet. Über den gesamten Zeitraum wurde dabei gleichmäßig eine Lösung von 23 g (0,1 Mol) Ammoniumperoxodisulfat in 50 g Wasser zudosiert. Nach einer Nachreaktionszeit von 0,5 h, Entfernung des Ethins (Acetylens) mittels Durchleiten von Stickstoff und Abkühlung auf Raumtemperatur wurde die Reaktionsmischung vom eingetragenen Wasser befreit, filtriert, zweimal mit je 200 ml Wasser gewaschen und im Wasserstrahlvakuum bei 130°C getrocknet. So erhielt man 82 g eines weißen kristallinen Feststoffes mit einem Schmelzpunkt von 211°C, entsprechend einer Ausbeute von 77,4 %, bezogen auf eingesetzte Phosphorige Säure. Die Elementaranalyse bestätigt die vorgeschlagene Struktur: P: ber. 33,7 %/gef. 31,6 %;
C: ber. 26,1 %/gef. 26,7 %;
H: ber. 5,4 %/gef. 5,7 %; ³¹P-NMR-Spektrum (NaOD): δ = 30 ppm (Singulett);
Reinheit (³¹P-NMR): 99 %.

### Beispiel 2: Ethylendiphosphonsäure

In einem beheizbaren Glasrohrreaktor mit Begasungsfritte wurde über einen Zeitraum von 10 h bei einer Temperatur von ca. 100°C gasförmiges Ethin (Acetylen) in 164 g (2 Mol) geschmolzene Phosphorige Säure eingeleitet. Über den gesamten Zeitraum wurde dabei gleichmäßig eine Lösung von 23 g (0,1 Mol) Ammoniumperoxodisulfat in 50 g Wasser sowie 107 g geschmolzene Phosphorige Säure zudosiert. Während der Reaktion wurde die Reaktionsmischung über eine Umpumpvorrichtung permanent über eine Fritte von der ausfallenden Ethylendiphosphonsäure befreit. Der Filterkuchen wurde zweimal mit je 200 ml Wasser gewaschen und im Wasserstrahlvakuum bei 130°C getrocknet. So erhielt man 69 g Ethylendiphosphonsäure in einer Reinheit von 99 % (³¹P-NMR), entsprechend einer Ausbeute von 65 %, bezogen auf die anfangs eingesetzte Phosphorige Säure. In die Reaktionsmischung wurde anschließend unter gleichen Bedingungen Ethin (Acetylen) eingeleitet, wobei weitere Ethylendiphosphonsäure ausfiel.

## Patentansprüche

1. Verfahren zur Herstellung von Ethylendiphosphonsäuren der allgemeinen Formel I, 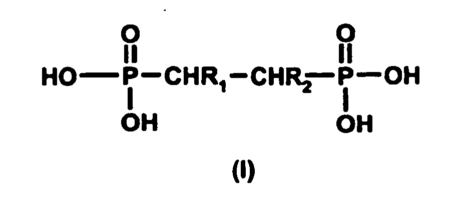 in der R₁ und R₂ gleich oder verschieden sein können und für Wasserstoff, für eine Carboxylgruppe, für ein Carbonsäurederivat, für eine - ggf. substituierte - Alkylgruppe mit 1 - 10 C-Atomen, für Phenyl, Benzyl oder für alkylsubstituierte Aromaten stehen **dadurch gekennzeichnet, dass** man Phosphorige Säure (H₃PO₃) direkt mit Alkinen ohne Lösungsmittel in der H₃PO₃-Schmelze in Gegenwart eines Radikalinitiators umsetzt.

2. Verfahren nach Anspruch 1, **dadurch gekennzeichnet, dass** als Radikalstarter Azoverbindungen eingesetzt werden.

3. Verfahren nach Anspruch 1 oder 2, **dadurch gekennzeichnet, dass** es sich bei den Azoverbindungen um kationische und/oder nicht-kationische Azoverbindungen handelt.

4. Verfahren nach einem oder mehreren der Ansprüche 1 bis 3, **dadurch gekennzeichnet, dass** als kationische Azoverbindungen 2,2'-Azobis(2-amidinopropan)-dihydrochlorid oder 2,2'-Azobis(N,N'-dimethylenisobutyramidin)-dihydrochlorid eingesetzt werden.

5. Verfahren nach einem oder mehreren der Ansprüche 1 bis 4, **dadurch gekennzeichnet, dass** als nicht-kationische Azoverbindungen Azobis(isobutyronitril), 4,4'-Azobis(4-cyano-pentansäure), 2,2'-Azobis(2-methylbutyronitril) eingesetzt werden.

6. Verfahren nach Anspruch 1, **dadurch gekennzeichnet, dass** als Radikalstarter peroxidische anorganische und/oder peroxidische organische Radikalstarter eingesetzt werden.

7. Verfahren nach Anspruch 6, **dadurch gekennzeichnet, dass** als peroxidische anorganische Radikalstarter Wasserstoffperoxid, Ammoniumperoxodisulfat und/oder Kaliumoperoxodisulfat eingesetzt werden.

8. Verfahren nach Anspruch 6, **dadurch gekennzeichnet, dass** als peroxidische organische Radikalstarter Dibenzoylperoxid, Di-tert.-butylperoxid und/oder Peressigsäure eingesetzt werden.

9. Verfahren nach einem oder mehreren der Ansprüche 1 bis 8, **dadurch gekennzeichnet, dass** die Radikalstarter während der Reaktion kontinuierlich zudosiert werden.

10. Verfahren nach einem oder mehreren der Ansprüche 1 bis 9, **dadurch gekennzeichnet, dass** die Alkine der allgemeinen Formel II entsprechen
R₁ - C ≡C- R₂ (II)
in der R₁ und R₂ gleich oder verschieden sein können und für Wasserstoff oder für eine Alkylgruppe mit 1 -10 C-Atomen stehen.

11. Verfahren nach einem oder mehreren der Ansprüche 1 bis 10, **dadurch gekennzeichnet, dass** es sich bei den Alkinen um Ethin (Acetylen), Propin, 1-Butin, 2-Butin, 1-Pentin, 2-Pentin, 1-Hexin, 2-Hexin und/oder 3-Hexin handelt.

12. Verfahren nach einem oder mehreren der Ansprüche 1 bis 11, **dadurch gekennzeichnet, dass** als Alkin Ethin (Acetylen) eingesetzt wird.

13. Verfahren nach einem oder mehreren der Ansprüche 1 bis 12 **dadurch gekennzeichnet, dass** die Umsetzung bei einer Temperatur von 70 bis 130°C erfolgt.

14. Verfahren nach einem oder mehreren der Ansprüche 1 bis 13. **dadurch gekennzeichnet, dass** die Umsetzung durch Einleiten von gasförmigem Ethin (Acetylen) unter Normaldruck erfolgt.

15. Verfahren nach einem oder mehreren der Ansprüche 1 bis 14 dass die Umsetzung unter Druck erfolgt.

16. Verfahren nach einem oder mehreren der Ansprüche 1 bis 15, **dadurch gekennzeichnet, dass** man Phosphorige Säure mit Ethin (Acetylen)in Gegenwart eines kationischen oder nicht-kationischen Radikalstarters oder in Gegenwart eines peroxidischen Radikalstarters zur Ethylendiphosphonsäure umsetzt.

17. Verfahren nach einem oder mehreren der Ansprüche 1 bis 16, **dadurch gekennzeichnet, dass** man Phosphorige Säure mit Ethin (Acetylen) in Gegenwart eines kationischen oder nicht-kationischen Radikalstarters oder in Gegenwart eines peroxidischen Radikalstarters zur Ethylendiphosphonsäure umsetzt und diese kontinuierlich aus dem Reaktionsgemisch durch Umlauf-Filtration entfernt und ebenso kontinuierlich die verbrauchte Phosphorige Säure durch neue ersetzt.

## Claims

1. A process for preparing ethylenediphosphonic acids of the formula I, 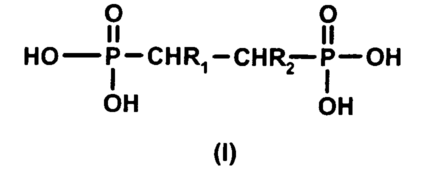 where R₁ and R₂ may be identical or different and are hydrogen, a carboxy group, a carboxylic acid derivative, an unsubstituted or substituted alkyl group having from 1 to 10 carbon atoms, phenyl, benzyl, or alkyl-substituted aromatic systems, which comprises reacting phosphorous acid (H₃PO₃) directly with alkynes without solvent in the H₃PO₃ melt in the presence of a free-radical initiator.

2. The process as claimed in claim 1, wherein the free-radical initiator used comprises azo compounds.

3. The process as claimed in claim 1 or 3, wherein the azo compounds comprise cationic and/or noncationic azo compounds.

4. The process as claimed in one or more of claims 1 to 3, wherein the cationic azo compounds used comprise 2,2'-azobis(2-amidinopropane) dihydrochloride or 2,2'-azobis(N,N'-dimethyleneisobutyramidine) dihydrochloride.

5. The process as claimed in one or more of claims 1 to 4, wherein the noncationic azo compounds used comprise azobis(isobutyronitrile), 4,4'-azobis(4-cyanopentanoic acid), and/or 2,2'-azobis(2-methylbutyronitrile).

6. The process as claimed in claim 1, wherein the free-radical initiators used comprise peroxidic inorganic and/or peroxidic organic free-radical initiators.

7. The process as claimed in claim 6, wherein the peroxidic inorganic free-radical initiators used comprise hydrogen peroxide, ammonium peroxodisulfate, and/or potassium peroxodisulfate.

8. The process as claimed in claim 6, wherein the peroxidic organic free-radical initiators used comprise dibenzoyl peroxide, di-tert-butyl peroxide, and/or peracetic acid.

9. The process as claimed in one or more of claims 1 to 8, wherein the free-radical initiators are metered in continuously during the reaction.

10. The process as claimed in one or more of claims 1 to 9, wherein the alkynes have the formula II
R₁-C ≡ -C-R₂ (II)
where R₁ and R₂ are identical or different and are hydrogen or an alkyl group having from 1 to 10 carbon atoms.

11. The process as claimed in one or more of claims 1 to 10, wherein the alkynes are ethyne (acetylene), propyne, 1-butyne, 2-butyne, 1-pentyne, 2-pentyne, 1-hexyne, 2-hexyne and/or 3-hexyne.

12. The process as claimed in one or more of claims 1 to 11, wherein the alkyne used comprises ethyne (acetylene).

13. The process as claimed in one or more of claims 1 to 12, wherein the reaction takes place at a temperature of from 70 to 130°C.

14. The process as claimed in one or more of claims 1 to 13, wherein the reaction takes place by introducing gaseous ethyne (acetylene) at atmospheric pressure.

15. The process as claimed in one or more of claims 1 to 14, wherein the reaction takes place at superatmospheric pressure.

16. The process as claimed in one or more of claims 1 to 15, wherein phosphorous acid is reacted with ethyne (acetylene) in the presence of a cationic or noncationic free-radical initiator, or in the presence of a peroxidic free-radical initiator, to give ethylenediphosphonic acid.

17. The process as claimed in one or more of claims 1 to 16, wherein phosphorous acid is reacted with ethyne (acetylene) in the presence of a cationic or noncationic free-radical initiator, or in the presence of a peroxidic free-radical initiator, to give ethylenediphosphonic acid, and this is removed continuously from the reaction mixture by a circulating filter system, and the phosphorous acid consumed is likewise replaced continuously by fresh acid.

## Revendications

1. Procédé de préparation d'acides éthylènediphosphoniques de formule générale I 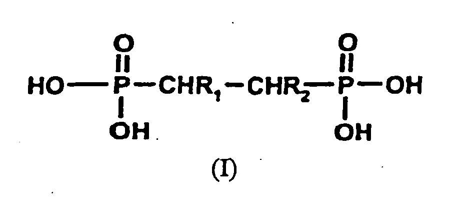 dans laquelle R₁ et R₂ peuvent être identiques ou différents et représentent l'hydrogène, un groupe carboxyle, un dérivé d'acide carboxylique, un groupe alkyle de 1 à 10 atomes de carbone éventuellement substitué, un groupe phényle ou benzyle ou un groupe aromatique alkylé, **caractérisé en ce que** l'on fait réagir de l'acide phosphoreux (H₃PO₃) directement avec des alcynes sans solvant, dans le H₃PO₃ fondu, en présence d'un amorceur radicalaire.

2. Procédé selon la revendication 1, **caractérisé en ce que** l'on utilise des composés azoïques comme amorceurs radicalaires.

3. Procédé selon la revendication 1 ou 2, **caractérisé en ce que** les composés azoïques sont des composés azoïques cationiques et/ou non cationiques.

4. Procédé selon l'une ou plusieurs des revendications 1 à 3, **caractérisé en ce que** l'on utilise comme composés azoïques cationiques du dichlorhydrate de 2,2'-azobis(2-amidinopropane) ou du dichlorhydrate de 2,2'-azobis(N,N-diméthylène-isobutyramidine).

5. Procédé selon l'une ou plusieurs des revendications 1 à 4, **caractérisé en ce que** l'on utilise comme composés azoïques non cationiques de l'azobis(isobutyronitrile), de l'acide 4,4'-azobis(4-cyanopentanoïque), du 2,2'-azobis(2-méthylbutyronitrile).

6. Procédé selon la revendication 1, **caractérisé en ce que** l'on utilise comme amorceurs radicalaires des amorceurs radicalaires de type peroxyde inorganique et/ou peroxyde organique.

7. Procédé selon la revendication 6, **caractérisé en ce que** l'on utilise comme amorceurs radicalaires de type peroxyde inorganique du peroxyde d'hydrogène, du peroxodisulfate d'ammonium et/ou du peroxodisulfate de potassium.

8. Procédé selon la revendication 6, **caractérisé en ce que** l'on utilise comme amorceurs radicalaires de type peroxyde organique du peroxyde de dibenzoyle, du peroxyde de di-tert-butyle et/ou de l'acide peracétique.

9. Procédé selon l'une ou plusieurs des revendications 1 à 8, **caractérisé en ce que** l'on ajoute les amorceurs radicalaires de manière dosée en continu pendant la réaction.

10. Procédé selon l'une ou plusieurs des revendications 1 à 9, **caractérisé en ce que** les alcynes correspondent à la formule générale II
R₁ C ≡C - R₂ (II)
dans laquelle R₁ et R₂ peuvent être identiques ou différents et représentent l'hydrogène ou un groupe alkyle de 1 à 10 atomes de carbone.

11. Procédé selon l'une ou plusieurs des revendications 1 à 10, **caractérisé en ce que** les alcynes sont l'éthyne (acétylène), le propyne, le 1-butyne, le 2-butyne, le 1-pentyne, le 2-pentyne, le 1-hexyne, le 2-hexyne et/ou le 3-hexyne.

12. Procédé selon l'une ou plusieurs des revendications 1 à 11, **caractérisé en ce que** l'on utilise de l'éthyne (acétylène) comme alcyne.

13. Procédé selon l'une ou plusieurs des revendications 1 à 12 **caractérisé en ce que** la réaction s'effectue à une température de 70 à 130°C.

14. Procédé selon l'une ou plusieurs des revendications 1 à 13, **caractérisé en ce que** l'on effectue la réaction en introduisant de l'éthyne (acétylène) gazeux sous la pression normale.

15. Procédé selon l'une ou plusieurs des revendications 1 à 14, **caractérisé en ce que** la réaction s'effectue sous pression.

16. Procédé selon l'une ou plusieurs des revendications 1 à 15, **caractérisé en ce que** l'on fait réagir de l'acide phosphoreux avec de l'éthyne (acétylène) en présence d'un amorceur radicalaire cationique ou non cationique ou en présence d'un amorceur radicalaire de type peroxyde pour obtenir de l'acide éthylènediphosphonique.

17. Procédé selon l'une ou plusieurs des revendications 1 à 16, **caractérisé en ce que** l'on fait réagir de l'acide phosphoreux avec de l'éthyne (acétylène) en présence d'un amorceur radicalaire cationique ou non cationique ou en présence d'un amorceur radicalaire de type peroxyde pour obtenir de l'acide éthylènediphosphonique, que l'on sépare en continu du mélange réactionnel par filtration sur un filtre à circulation permanente, et on remplace aussi en continu l'acide phosphoreux consommé par de l'acide phosphoreux frais.
